# EUROPEAN PATENT APPLICATION

(11) **EP 2 677 440 A2**
(43) Date of publication of application: **25.12.2013**
(21) Application number: 12764644.6
(22) Date of filing: 14.03.2012
(51) Int. Cl.: G06F 15/16, G06F 9/06, G06F 9/44

(54) **METHOD AND APPARATUS FOR SEPARATING IN ORDER TO UPGRADE SOFTWARE REMOTELY IN M2M COMMUNICATION**

(30) Priority: 30.03.2011 KR 20110029115; 12.05.2011 KR 20110044469; 17.10.2011 KR 20110106094
(71) Applicant: KT Corporation, Seongnam-si, Gyeonggi-do 463-815 (KR)
(72) Inventor: KIM, Sangeon, Seoul 137-140 (KR); JUNG, Hanwook, Seoul 137-140 (KR); HEO, Sungphil, Seoul 137-140 (KR); KANG, Sujin, Seoul 137-140 (KR); KIM, Yeonsoo, Seoul 137-140 (KR)
(74) Representative: Ahner, Philippe
(86) International application number: PCT/KR2012/001856
(87) International publication number: WO 2012/134080

(57) **Abstract**

The present disclosure is related to separately upgrading or modifying a remote software in a machine to machine (M2M) communication. Particularly, in the case of upgrading or modifying firmware of an M2M device or an M2M gateway, the present disclosure relates to separating an M2M service provider domain and a manufacturer domain, and independently upgrading or modifying each of the separated domains.

## Description

### [Technical Field]

The present disclosure relates to a separate upgrade or modification of a remote software in a machine to machine (M2M) communication. Herein, the machine to machine (M2M) communication refers to any communication scheme which does not require human intervention in the process of communication. The M2M communication may be referred to as a machine type communication (MTC), a smart device communication, or a machine oriented communication. A method and apparatus for remotely upgrading or modifying software of a terminal or gateway performing such telecommunication functions may be necessary.

### [Background Art]

Typically, a firmware upgrade scheme is used for remotely upgrading software of a terminal or gateway performing an M2M communication function. A firmware is a binary file which is created in the form of a single executable file including all software functions, and is also software of a terminal or gateway performing an M2M communication function. A firmware upgrade may be performed by remotely transmitting only a modified portion of a single executable file. Such upgrade scheme is typically used as a upgrade scheme for an embedded device. In general, such upgrade scheme is used for a sensor or control device of which computing resources such as a CPU and a memory are very limited.

However, firmware of a terminal or gateway performing an M2M communication function may be classified into software requiring an M2M service provider's verification, software provided by a manufacturer, and software provided by a third-party application provider. In the case of upgrading firmware configured as single software, a typical firmware upgrade scheme requires the M2M service provider's verification.
Furthermore, even in the case of software not requiring the M2M service provider's verification, such as the manufacturer's software and the third-party application provider's software, the M2M service provider's verification is performed.

The above-described firmware upgrade method may have a problem that even in the case that software not requiring an M2M service provider's verification is upgraded, the M2M service provider's verification may still be necessary. Furthermore, in the case of (i) software provided by a manufacturer or (ii) software which is provided by a third-party application provider and does not require an M2M service provider's verification, there may be a problem that the manufacturer or the application provider may not independently be able to perform a software upgrade.

In addition, in systems performing M2M communication functions, a control method remotely performing a software upgrade for performance enhancement and/or maintenance of software may be necessary.

In the case that a software upgrade is remotely performed using a typical technique, there may be a problem that it is difficult to process related parameters required for installation and operation of software. If software is remotely upgraded without properly processing parameters, there may be a problem that a corresponding upgrade fails, or errors (such as a system malfunction) occur. Further, since most M2M communications use a wireless communication network, there may be a problem that a failure of remote upgrade causes unnecessary traffic in the wireless network, thereby leading to a waste of wireless resources. Furthermore, there may be a problem that a failure of software upgrade increases an electrical power consumption of a terminal with a wireless communication interface, thereby shortening an operating life of the terminal.

### [Disclosure of Invention]

### [Technical Problem]

In the case of upgrading or modifying software of a terminal or gateway, the present embodiment relates to a method and an apparatus for enabling a related party (i.e., a related management authority) to remotely and separately upgrade or modify a corresponding portion of software requiring upgrade or modification, in order to overcome various problems. Herein, the related party may include an M2M service provider, a manufacturer, and/or a third-party application provider. The terminal or gateway may have a limited resource such as a CPU and a memory, and perform an M2M communication function. In particular, in the case of upgrading or modifying firmware of a terminal or gateway performing an M2M communication function, the present embodiment relates to a method and an apparatus for (i) enabling an M2M service provider to remotely upgrade or modify the software requiring the M2M service provider's verification, (ii) enabling a manufacturer to remotely upgrade or modify the software provided by the manufacturer, and (iii) enabling a third-party application provider to remotely upgrade or modify the software provided by the third-party application provider.

Furthermore, , in order to overcome such problems, the present embodiment relates to a control procedure of remotely upgrading or modifying software in a system providing an M2M service, and a message constituting method therefor.

### [Technical Solution]

In accordance with at least one embodiment, a method may be provided for separately upgrading or modifying a remote software installed in (i) a machine to machine (M2M) device which performs a function of an M2M communication enabling communications between two or more machines or (ii) an M2M gateway performing a gateway function in the M2M communication. The method includes: transmitting, by a first server, a second software for upgrade or modification of a first software to the M2M device or the M2M gateway, wherein the first software is installed in the M2M device or the M2M gateway; and performing the upgrade or modification of the first software, separately from a third software installed in the M2M device or the M2M gateway, wherein the third software is upgraded or modified by a second server, and the first server is an entity different from the second server.

In accordance with another embodiment, a method may be provided for upgrading or modifying a first software installed in (i) a machine to machine (M2M) device which performs a function of an M2M communication enabling communications between two or more machines or (ii) an M2M gateway performing a gateway function in the M2M communication. The method includes: receiving a second software for upgrade or modification of the first software from a first server; and upgrading or modifying the first software using the received second software, wherein the upgrading or modifying is performed separately from a third software installed in the M2M device or the M2M gateway, and the first server is a different entity from the second server performing upgrade of the third software.

In accordance with still another embodiment, an apparatus may be provided for upgrading or modifying software installed in (i) a machine to machine (M2M) device which performs a function of an M2M communication enabling communications between two or more machines or (ii) an M2M gateway performing a gateway function in the M2M communication. The apparatus includes: an upgrade/modification storage unit configured to store a second software for upgrade or modification of a first software, wherein the first software is installed in the M2M device or the M2M gateway; an authentication processor configured to request an authorization check associated with the upgrade or modification of the first software to an authorization control server, in order to modify or upgrade the first software; and a communication processor configured to transmit the second software to the M2M device or the M2M gateway, wherein the upgrade or modification of the first software is performed in a different apparatus from an apparatus which modifies or upgrades a third software installed in the M2M device or the M2M gateway.

In accordance with still another embodiment, an apparatus in which a first software is installed may be provided for performing a machine to machine (M2M) communication or a gateway function, in order to upgrade software installed in (i) an M2M device which performs a function of the M2M communication enabling communications between two or more machines or (ii) an M2M gateway performing a gateway function in the M2M communication. The apparatus includes: an upgrade/modification control processor configured to receive a second software for upgrade or modification of the first software, from a first server; and an upgrade/modification processor configured to modify or upgrade the first software using the received second software, wherein the first server is a different entity from a second server which modifies or upgrades a third software installed in the at least one of the M2M device and the M2M gateway.

In accordance with still embodiment, a method may be provided for separately upgrading or modifying a remote software installed in (i) a machine to machine (M2M) device which performs a function of an M2M communication enabling communications between two or more machines or (ii) an M2M gateway performing a gateway function in the M2M communication, in a system including the M2M device, the M2M gateway and a server. The method includes: transmitting, by a first server, a second software for upgrade or modification of a first software to the M2M device or the M2M gateway, wherein the first software is installed in the M2M device or the M2M gateway; and performing, by the M2M device or the M2M gateway, the upgrade or modification of the first software using a received second software, wherein the first server is a different entity from a second server which modifies or upgrades a third software installed in the M2M device or the M2M gateway.

In accordance with still another embodiment, a method may be provided for separately upgrading or modifying a remote software installed in a device or gateway which performs a function of an M2M communication enabling communications between two or more machine. The method includes: transmitting, by a server, a command for upgrade or modification of a first software to an M2M device or an M2M gateway, wherein the first software is installed in the M2M device or the M2M gateway; exchanging, by the server, at least one of (i) parameter information for installation of a software for the upgrade or modification of the first software, (ii) environment type information of the first software, and (iii) content type information of the first software, with the M2M device or the M2M gateway; transmitting, by the server, a second software for the upgrade or modification of the first software to the M2M device or the M2M gateway; and receiving, by the server, a completion notification of the upgrade or modification of the first software from the M2M device or the M2M gateway.

In accordance with still another embodiment, a method may be provided for separately upgrading or modifying a remote software installed in a device or gateway which performs a function of an M2M communication enabling communications between two or more machines. The method includes: receiving, by an M2M device or an M2M gateway, a command for upgrade or modification of an installed first software from a server; exchanging at least one of (i) parameter information for installation of a software for the upgrade or modification of the first software, (ii) environment type information of the first software, and (iii) content type information of the first software, with the server; receiving a second software for the upgrade or modification of the first software; performing, by the M2M device or the M2M gateway, the upgrade or modification of the first software using the second software; and notifying an upgrade/modification completion of the first software to the server.

### [Advantageous Effects]

The present embodiment may upgrade or modify software of an M2M device and/or an M2M gateway independently from an M2M service provider. That is, the present embodiment may enable a manufacturer or a third-party application provider to upgrade/modify a software function or to provide a new application, regardless of the M2M service provider.

The present embodiment may enable an M2M service provider to upgrade or modify only necessary software, such as a communication function software requiring the M2M service provider's authentication and software required for a subscription authentication, thereby reducing a work load and a wireless resource occupancy associated with an upgrade load of the M2M service provider.

Furthermore, the present embodiment may process a related parameter required for installation and operations of software, in the case of remotely performing a software upgrade.

### [Brief Description of the Drawings]

FIG. 1 illustrates an exemplary structure of a typical M2M device and/or a typical M2M gateway.

FIG. 2 is a diagram illustrating a system for separately upgrading or modifying software of an M2M device and/or an M2M gateway in accordance with at least one embodiment of the present specification.

FIG. 3 illustrates a procedure of separately upgrading or modifying software of an M2M device and/or an M2M gateway in accordance with at least one embodiment of the present specification.

FIG. 4 illustrates a software structure of an M2M device or an M2M gateway in accordance with other embodiments of the present specification.

FIG. 5 is a diagram illustrating structures of each apparatus in accordance with at least one embodiment of the present specification.

FIG. 6 is a diagram illustrating a physical storage medium for a separate upgrade of software in accordance with a least one embodiment of the present specification.

FIG. 7 is a diagram illustrating a physical storage medium for a separate upgrade of software in accordance with other embodiments of the present specification.

FIG. 8 is a diagram illustrating a physical storage medium for a separate upgrade of software in accordance with still other embodiments of the present specification.

FIG. 9 illustrates a procedure of performing an upgrade or modification of a certain software in a remote software control server in accordance with at least one embodiment.

FIG. 10 illustrates a procedure of performing an upgrade or modification of a certain software in an M2M device performing an M2M communication or an M2M gateway performing a gateway function in accordance with at least one embodiment.

FIG. 11 illustrates a structure of an M2M system to which at least one embodiment may be applied.

FIG. 12 is a diagram illustrating a control procedure initiating a software upgrade/modification in a sever providing an M2M service, and messages used for each operation.

FIG. 13 is a diagram illustrating a control procedure initiating a software upgrade/modification in a terminal (or device) providing an M2M service, and messages used for each operation.

FIG. 14 illustrates a scheme of storing constitution information of a message used in a control procedure of an M2M system, and a structure of the constitution information stored in in the M2M system, in accordance with at least one embodiment.

FIG. 15 illustrates a scheme of storing constitution information of a message used in a control procedure of an M2M system, and a structure of the constitution information stored in in the M2M system, in accordance with other embodiments.

### [Description of reference numerals]

2100, 2110: M2M device

2200, 2250: M2M gateway

2210, 2220, 2260, 2270: Machine

2300: Wireless communication network

2310: Internet

2400, 2410: Remote software control server

2500: Authorization control server

2510: M2M server

### [Mode for Carrying out the invention]

Hereinafter, exemplary embodiments of the present invention will be described with reference to the accompanying drawings. In the following description, the same elements will be designated by the same reference numerals although they are shown in different drawings. Furthermore, in the following description of the present embodiment, a detailed description of known functions and configurations incorporated herein will be omitted when it may make the subject matter of the present embodiment unclear.

In addition, in describing constituent elements of the present embodiment, the terms of "a first, a second, A, B, (a), (b), or the like" may be used. Such terms are used only for distinguishing a certain constituent element from another constituent element, and do not limit an essential feature, order, or sequence of a corresponding constituent element. In the case that a certain constituent element is described as being "coupled with," "joined to," or "connected to" another constituent element, the certain constituent element may be directly coupled with or joined/connected to the another constituent element. In this case, it should be understood that a different constituent element may be "coupled," "joined," or "connected" between the constituent elements.

The present embodiments will be described based on an M2M communication. Herein, the M2M communication may be variously referred to as a machine type communication (MTC), Internet of things (IoT), a smart device communication (SDC), or a machine oriented communication. The M2M communication may refer to a variety of communications which can be performed without human intervention in the process of communication. The M2M communication may be used in such various fields as an intelligent metering (a smart metering), an electronic health (e-health), a home appliance communication (a connected consumer), a city automation, an automotive application, and the like.

As described above, in the case of an M2M communication, an upgrade of an entire device may cause high loading since software developed by a variety of providers may be installed in a corresponding device.

The present specification is related to a method of remotely performing a partial software upgrade or modification in the case of upgrading or modifying a plurality of software programs installed in a device, in order to overcome such a problem.

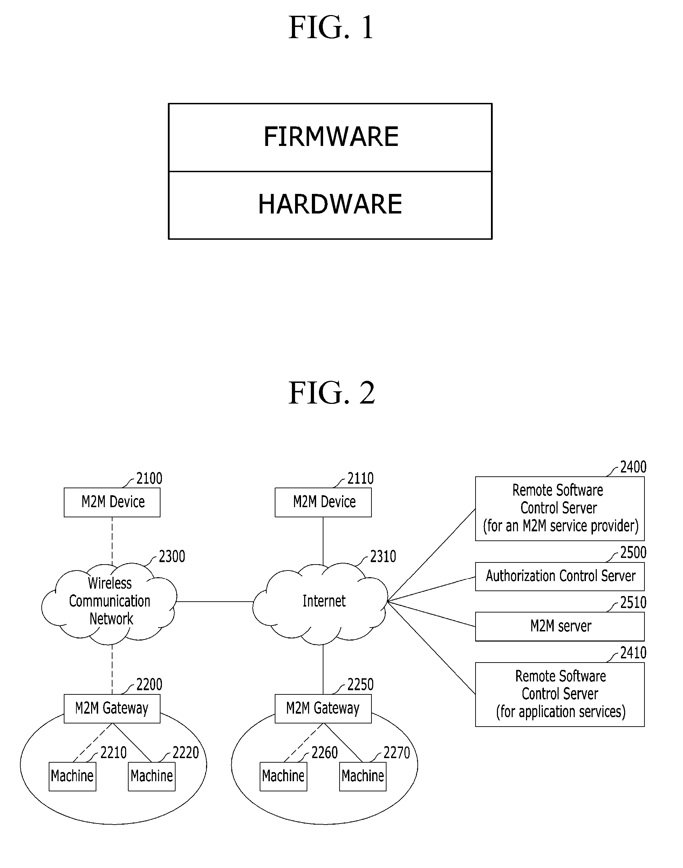

FIG. 1 illustrates an exemplary structure of a typical M2M device and/or a typical M2M gateway. Typically, firmware may affect an entire system since the firmware is integrally implemented with hardware. Accordingly, typically, an upgrade of only the firmware is generally performed.

FIG. 2 is a diagram illustrating a system for separately upgrading or modifying software of an M2M device and/or an M2M gateway in accordance with at least one embodiment of the present specification.

In a system structure as shown in FIG. 2, an operating system (OS), each application software, libraries, and so forth may be partially upgraded or modified. Herein, the operating system is an environment where an executable file created per software function may be operated.

More specifically, in FIG. 2, software of an M2M device and/or an M2M gateway may be remotely and partially upgraded or modified. In other words, the present embodiment may enable a party (e.g., a management authority) with authorization for a partial software upgrade/modification to perform a software upgrade/modification without affecting other software. Herein, the party with authorization for the partial software upgrade may represent a party (e.g., a management authority) being entitled to partially and separately upgrade or modify software of an M2M device and/or an M2M gateway. Referring to FIG. 2, the system for separately (or independently) upgrading or modifying software may include M2M devices 2100 and 2110, M2M gateways 2200 and 2250, machines 2210, 2220, 2260, and 2270, wireless communication network 2300, Internet 2310, remote software control servers 2400 and 2410, M2M server 2510, and authorization control server 2500.

M2M devices 2100 and 2110 may correspond to machines (or devices) including a wireless communication processor. M2M devices 2100 and 2110 may communicate with M2M server 2510 without human intervention. That is, M2M devices 2100 and 2110 may transmit and receive information using the wireless communication processor, in connection with M2M server 2510. Herein, the information may be created or controlled by a sensor, a controller, or the like.

M2M gateway 2200 and 2250 may provide a relay function such that machines 2210, 2220, 2260, and 2270 (e.g., a sensor, an actuator, etc.) may communicate with M2M server 2510 without human intervention.

Machines 2210, 2220, 2260, and 2270 may communicate with M2M gateway 2200 and 2250.

Wireless communication network 2300 may provide a required wireless communication function such that M2M devices 2100 and 2110 or M2M gateways 2200 and 2250 may communicate with M2M server 2510. Wireless communication network 2300 may include such various mobile communication network as a second generation (2G) wireless (or mobile) communication network, a third generation (3G) wireless (or mobile) communication network, a WiBro network, a WiFi network, LTE/LTE-A networks, and so forth.

Internet 2310 may provide a required internet communication function such that M2M devices 2100 and 2110 or M2M gateways 2200 and 2250 may communicate with M2M server 2510.

Remote software control server 2400 may correspond to a remote software control server for an M2M service provider. Remote software control server 2410 may correspond to a remote software control server for application software. Remote software control servers 2400 and 2410 may control to remotely upgrade or modify at least a portion of software of M2M devices 2100 and 2110 and/or M2M gateways 2200 and 2250.

Authorization control server 2500 may perform functions associated with checking of a proper authorization of a software upgrade/modification. That is, Authorization control server 2500 may check whether there is a proper authorization to upgrade or modify software. M2M server 2510 may perform an M2M communication function other than a software upgrade/modification. Remote software control server 2400 for an M2M service provider, remote software control server 2410 for application software, authorization control server 2500, and M2M server may be implemented as one physical apparatus.

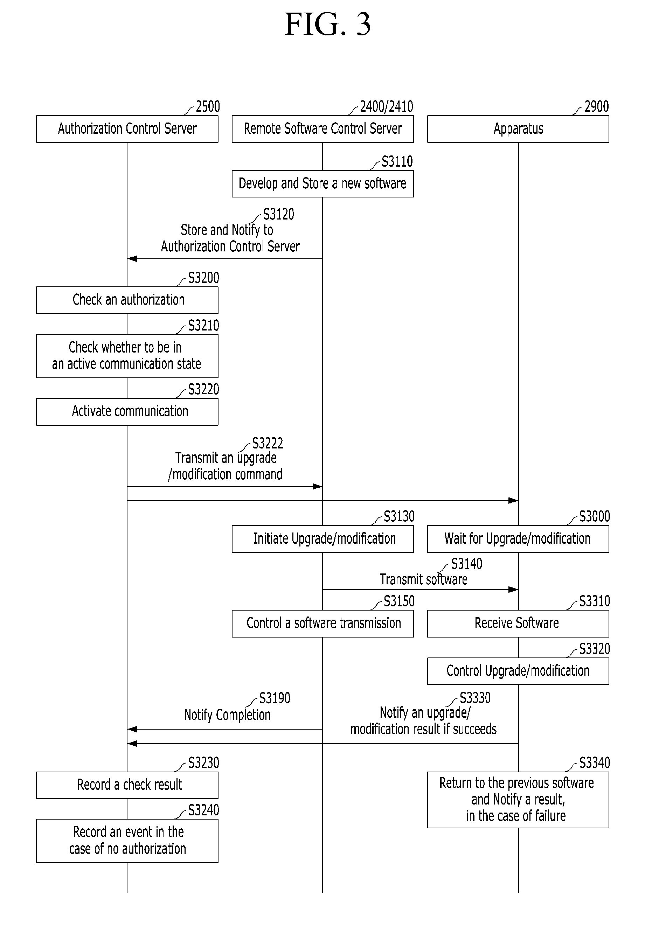

FIG. 3 illustrates a procedure of separately upgrading or modifying software of an M2M device and/or an M2M gateway in accordance with at least one embodiment of the present specification.

According to FIG. 2 and an embodiment shown in FIG. 3, each related party (e.g., each of the related management authorities) may remotely upgrade or modify only an associated software, when upgrading or modifying software of an M2M device and/or an M2M gateway. That is, each related party may partially perform a software upgrade/modification.

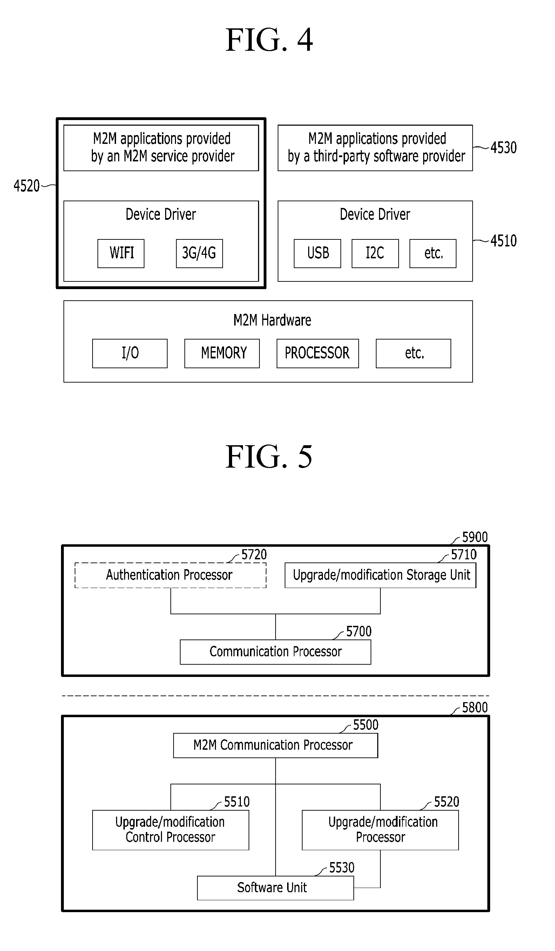

M2M devices 2100 and 2110 and/or M2M gateways 2200 and 2250 shown in FIG. 2 may be structured as shown in FIG. 4. Such structure of FIG. 4 may be different from a typical structure as shown in FIG. 1.

Briefly describing FIG. 4, software may include device drivers 4510 and 4520, applications 4520 and 4530 which are structured separately as shown in FIG. 4. For example, the portion "4520" may be upgraded or modified through control of remote software control server 2400 for an M2M service provider. The portion "4530" may be upgraded or modified through control of remote software control server 2410 for application services.

In the case that software is upgraded or modified for performance enhancement of the portion "4520," a new software may be stored in remote software control server 2400 for the M2M service provider, and M2M devices 2100 and 2110 and/or M2M gateways 2200 and 2250 may be remotely upgraded or modified.

In this case, a newly upgraded or modified partial software may be stored in remote software control server 2400 for the M2M service provider. According to control of M2M server 2510, the software of an upgrade/modification object (i.e., an object to be upgraded or modified) may be partially upgraded or modified at a corresponding upgrade/modification time. Herein, the upgrade/modification object may be such an apparatus as M2M devices 2100 and 2110 and/or M2M gateways 2200 and 2250.

For a partial upgrade or modification of the software shown in FIG. 4, FIG. 3 discloses a detailed operation associated with a software upgrade or modification. In other words, FIG. 3 includes operations associated with authorization control server 2500, remote software control server 2400 and 2410, and/or apparatus 2900 shown in FIG. 2. Apparatus 2900 may correspond to any one of M2M devices 2100 and 2110, M2M gateways 2200 and 2250, and machines 2210, 2220, 226, and 2270 coupled to M2M gateways 2200 and 2250. Remote software control server 2400 and 2410 may perform a software upgrade, according to control of M2M server 2510.

At step S3110, in the case that a new software to be used for upgrade/modification is developed and a distribution of the new software is determined, the new software may be stored in a server (e.g., "2400" or "2401" in FIG. 2) which is operated by an upgrade institution or organization. At step S3120, a notification (or information) that a software upgrade/modification is necessary may be sent to authorization control server 2500. Herein, the notification (or information) may include at least one of a software name, a distribution date, and a distributor which are associated with the new software to be used for upgrade/modification.

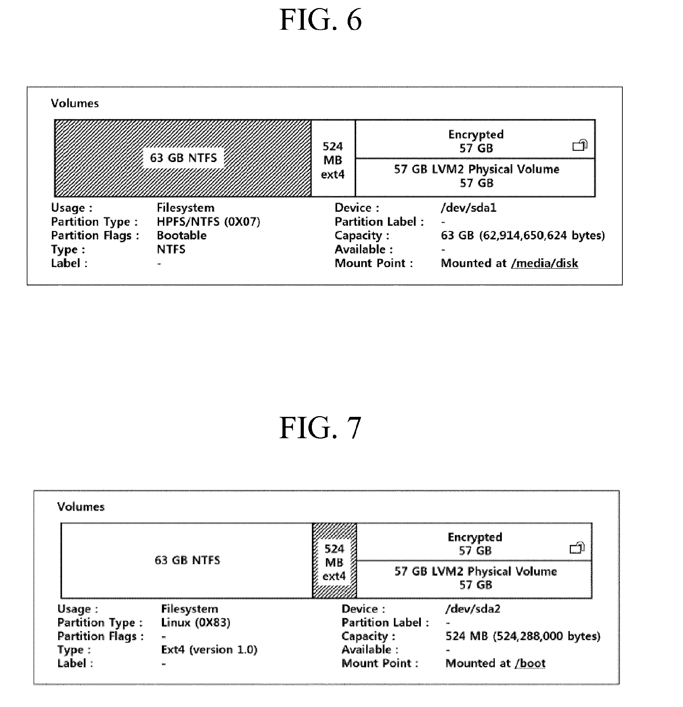

A software upgrade or modification may be performed based on network situations such that traffic may be dispersed. Accordingly, at step S3200, authorization control server 2500 may check whether a distributor has an authorization to update or modify a corresponding software. A method of checking an upgrade/modification authorization may be performed through checking whether the distributor has an authorization to upgrade or modify firmware or software corresponding to 4510, 4520, and 4530 in FIG. 4. The firmware or software may be accessed and controlled using a corresponding authorization information since a physical storage space is partitioned as shown in FIG. 6 to FIG. 8 (as described later).

At step S3210, when determining there is an authorization to upgrade or modify the corresponding software according to a checking result of an upgrade/modification authorization of firmware or software, authorization control server 2500 may check whether apparatus 2900 is in an active communication state where the upgrade/modification of apparatus 2900 can be performed. For example, the firmware associated with "4520" in FIG. 4 may be upgraded or modified. In the case that a partitioned storage space of FIG. 6 (as described later) is used for the firmware, remote software control server 2400 in FIG. 2 may ascertain (or check) a name, an upgrade/modification date, and a size of software or firmware, and/or read/write functions on the partitioned storage space in FIG. 6.

At step S3230, the check result is recorded. At step S3240, in the case of determining there is no upgrade/modification authorization, such information as an event occurrence time, an attempted IP address, a related connection information, and so forth may be recorded (or stored), and then a software upgrade/modification procedure of FIG. 3 may be terminated.

At step S3220, in the case that an M2M device or an M2M gateway is in a dormant state where a communication cannot be performed at step S3210, authorization control server 2500 may send a control signal for a state transition to apparatus 2900. Herein, the control signal for the state transition may be a state control signal controlling apparatus 2900 such that a state of apparatus 2900 is transited into an active communication state.

Thereafter, at step S3222, authorization control server 2500 may send a notification that a corresponding upgrade/modification is possible, to at least one of remote software control servers 2400 and 2410, and apparatus 2900.

At step S3130, server(s) 2400 and/or 2410 having software or firmware to be used for a software/firmware upgrade or modification may initiate an upgrade/modification procedure for apparatus 2900, using a new software or firmware. In this case, server(s) 2400 and/or 2410 may ascertain such information of an M2M device or gateway as a name, a size, and a last upgrade/modification date/time of software/firmware, and thereafter record such information.

At step S3140, server 2400 or 2410 may send a new software or firmware in order to perform an upgrade/modification procedure. At step S3310, apparatus 2900 may receive the new software or firmware through "5510" in FIG. 5 (as described later). Furthermore, at steps S3150 and S3320, apparatus 2900 may perform an error control and a flow control until the new software or firmware is completely received.

At step S3190, when a transmission of the new software or firmware is complete, server 2400 or 2410 may notify a completion time, a software name, and version information to authorization control server 2500. Furthermore, when receiving all the new software or firmware, apparatus 2900 may perform a software or firmware upgrade/modification using the received software or firmware, and perform such a process as a rebooting. At step S3330, when functions are properly performed after rebooting, apparatus 2900 may notify a completion time, a software name, and version information to authorization control server 2500. However, at step S3340, when operations (or functions) are not properly performed after rebooting, apparatus 2900 may return to (or reconstruct) the previous software or firmware, and notify the result to authorization control server 2500.

In the same manner, software may be upgraded or modified for a performance improvement of application 4530 in FIG. 4. In this case, a new software may be stored in remote software control server 2410 for application services. Furthermore, a software upgrade/modification for such apparatus as M2M devices 2100 and 2110 or M2M gateways 2200 and 2250 may be partially performed using the stored new software, according to control of M2M server 2510.

Authorization control server 2500 may determine which control server will perform a partial upgrade/modification of the software shown in FIG. 4. That is, authorization control server 2500 may determine which one of 'remote software control server 2400 for an M2M service provider' and 'remote software control server 2410 for application services' will perform the partial upgrade/modification.

An upgrade/modification scheme described through a structure and a procedure (or process) of FIG. 2 and FIG. 3 has an advantage of performing a separate upgrade or modification of software. In particular, as described in FIG. 2, an M2M device may include software requiring an M2M service provider's authentication and software not requiring the M2M service provider's authentication. A typical firmware scheme for upgrading or modifying the M2M may be inefficient since the M2M service provider performs authentication for even the software not requiring the M2M service provider's authentication. Furthermore, other software-related parties such as an application developer may not be capable of independently performing a software upgrade/ modification, and should perform an upgrade/modification procedure according to an authentication procedure of the M2M service provider. Accordingly, untimely performance of an software upgrade/modification might occur. However, in the case of applying a structure and a software upgrade/modification procedure shown in FIG. 2 and FIG. 3 of the present specification, a separate upgrade/modification may be possible, and a range of upgrade/modification may be restricted to a specific software.

FIG. 4 illustrates a software structure of an M2M device or an M2M gateway in accordance with other embodiments of the present specification. "4520" may be a portion directly associated with communications, and be a region controlled by remote software control server 2400 for an M2M service provider, shown in FIG. 2 and FIG. 3. Meanwhile, "4530" may be a general application software, and be a region controlled by remote software control server 2410 for application services. The regions "4520" and "4530" may be controlled by an M2M service provider and an application provider, respectively, and are not limited thereto. In other words, remote software control server 2400 for the M2M service provider may control the region "4530". Remote software control server 2410 for application services may control the region "4520" through cooperation with remote software control server 2400 for the M2M service provider.

Software of an M2M device or an M2M gateway may be upgraded or modified through a structure and process shown in FIG. 2 through FIG. 4. Furthermore, such software upgrade or modification may be performed through a wireless communication (over the air (OTA)). In this case, an application software (e.g., an M2M application software) and an M2M service provider's software may be independently (or separately) upgraded or modified. Herein, the M2M service provider's software may be software which is managed or authenticated by an M2M service provider. The M2M service provider may be a mobile network operator (MNO).

As shown in FIG. 3 and FIG. 4, a separate upgrade/modification of software does not affect software of other region. In other words, a plurality of applications may be installed in the region "4530" in FIG. 4. In this case, each software of the plurality of applications may be separately upgraded or modified such that a software upgrade/modification of a certain application does not affect parts or elements of other applications. Accordingly, in the case of upgrading or modifying application 4530, an M2M service provider may not necessarily perform an authentication for reasons of security or system protection.

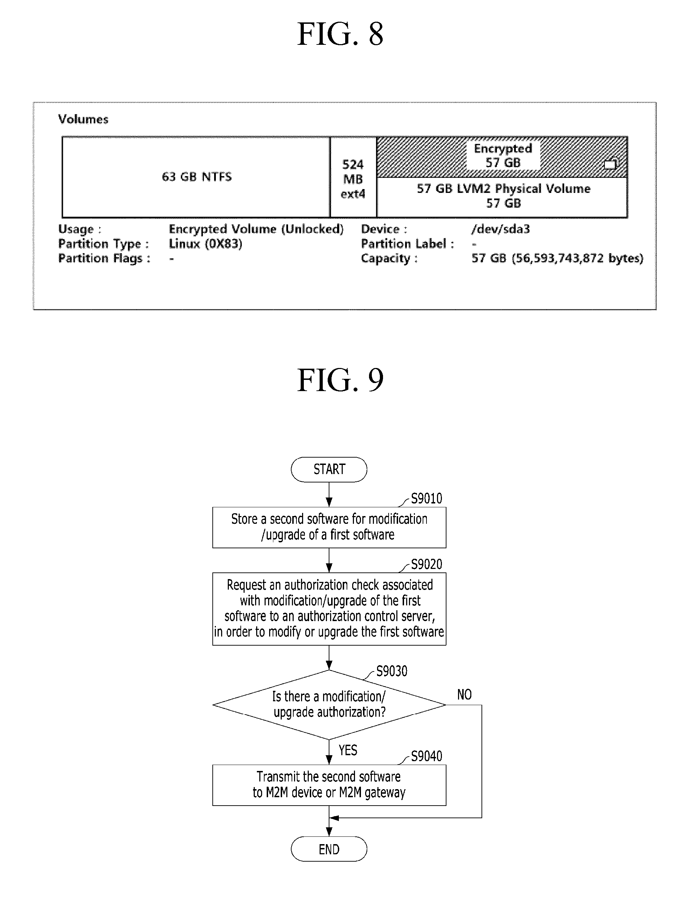

FIG. 6 to FIG. 8 (as described later) illustrate embodiments in which one physical storage medium may be partitioned into a plurality of different regions in order to separately upgrade or modify software. Such partitioned regions of a software storage space may be used for each software of FIG. 4. More specifically, a region partitioned as shown in FIG. 6 may be used for "4510" of FIG. 4, a region partitioned as shown in FIG. 7 may be used for "4520" of FIG. 4, and a region partitioned as shown in FIG. 8 may be used for "4530" of FIG. 4. Contents and structures shown in FIG. 6 through FIG. 8 are exemplary embodiments. Accordingly, a capacity of a partitioned region, and a partition type, may be differently determined (or structured) according to various embodiments. Partition types may be differentiated using a partition identifier. Partition identifiers associated with partitioned regions shown in FIG. 6 to FIG. 8 may be 0x07, 0x83, and 0x83, respectively. Furthermore, each partitioned region shown in FIG. 6 to FIG. 8 may be further partitioned using the same partition identifier. For example, a partitioned region of the partition type "HPFS/NTFS" may be used for a single file system, or be further partitioned for two or three file systems.

Software or firmware "4510" of FIG. 4 may be stored in a partitioned storage space shown in FIG. 6. Such software may be differentiated based on path information indicating a software location, a software name, and/or version information. The necessity of a software upgrade or modification may be determined based on 'upgraded/modified date/time information of software,' 'software size,' and so forth.

As described above, even in the case that an M2M service provider performs an upgrade or modification of a software region such as a networking region 4520 of FIG. 4, such upgrade or modification may not affect other applications (e.g., 4530). Accordingly, such partial (or separate) upgrade or modification may prevent a reinstallation of all applications.

As shown in FIG. 4, a software structure may be separated into (i) a region (e.g., 4520 or 4510) requiring an authentication or having a significant influence on a corresponding system, and (ii) a region (e.g., 4530) of an application software. In this case, a software upgrade or modification may be performed without an M2M service provider's intervention.

When software is to be upgrade or modified, an M2M device and/or an M2M gateway of FIG. 2 and FIG. 4 may receive a new software from 'a remote software control server for an M2M service provider,' or 'a remote software control server for application softwares' according to whether software to be upgraded or modified is 'software for the M2M service provider' or 'an application software.' The M2M device and/or the M2M gateway may partially upgrade or modify a corresponding software using the received new software. In order to realize such a partial (or separate) upgrade/modification, the M2M device and/or the M2M gateway may further include an upgrade control processor and an upgrade processor, other than a typical constituent element for an M2M communication. Alternatively, the upgrade control processor and the upgrade processor may be additionally implemented or included in the typical structural element for the M2M communication.

FIG. 5 is a diagram illustrating structures of each apparatus in accordance with at least one embodiment of the present specification.

Considering constituent elements, upgrade/modification control processor 5510 may determine the necessity of a software upgrade/modification. Furthermore, upgrade/modification control processor 5510 may receive a new software from 'a remote software control server for an M2M service provider,' or 'a remote software control server for application softwares' according to whether software to be upgraded or modified is 'software for the M2M service provider' or 'an application software.' Upgrade/modification control processor 5510 may be combined with a transmitting/receiving constituent element for an M2M communication.

Upgrade/modification processor 5520 may partially upgrade or modify a corresponding software using the received new software. The block "5800" may illustrate such structural elements described above.

The block "5800" may illustrate a structure of an M2M device or an M2M gateway. M2M communication processor 5500 may be a transmitter/receiver for an M2M communication, and perform communications using a wireless communication network as described in FIG. 2.

The block "5900" may illustrate a structure of a remote software control server. In the block "5900," communication processor 5700 may enable 'a remote software control server for an M2M service provider' or 'a remote software control server for application services' to perform communications using Internet or a wireless communication network.

Upgrade/modification storage unit 5710 may store software (i.e., software to be used for upgrade/modification) to be provided to an M2M device or an M2M gateway, and provide a stored upgrade/modification file according to a request or a self-determination.

Authentication processor 5720 may be optionally included in remote software control server 5900. For example, in the case of a remote software control server for a manufacturer or a third-party application provider, authentication processor 5720 may ascertain an authorization to upgrade or modify a corresponding software, through authorization control server 2500 of FIG. 2. However, in the case of a remote software control server for an M2M service provider, an authentication procedure may be omitted. Accordingly, in this case, the remote software control server may not include authentication processor 5720.

FIG. 9 illustrates a procedure of performing an upgrade or modification of a certain software in a remote software control server in accordance with at least one embodiment.

At step S9010, the remote software control server may store a second software for upgrade or modification of a first software. Herein, the first software may be software installed in one or more M2M devices or M2M gateways. The second software may be created by at least one of (i) an M2M service provider, (ii) a manufacturer who manufactured the M2M device or the M2M gateway, and (iii) a third-party application provider who created the first software. Herein, the M2M service provider may be an operator (i.e., a communication network operator) of a communication network applied to an M2M communication. The first and second software may include firmware.

At step S9020, in order to perform an upgrade or modification of the first software, the remote software control server may request an authorization control server to check whether there is an authorization to upgrade or modify the first software. In this case, embodiments of checking an upgrade/modification authorization as described in FIG. 3 may be applied. In the case that the upgrade/modification authorization is ascertained (S9030-Yes), i.e., in the case that there is an authorization to upgrade or modify the first software, the remote software control server may transmit the second software to an M2M device or an M2M gateway at step S9040. Herein, an upgrade or modification of the first software may be performed separately (or independently) from a third software installed in the M2M device or M2M gateway.

Meanwhile, the first software described in FIG. 9 may be one software among a group of software installed in the M2M device or the M2M gateway. Furthermore, a first software upgrade or modification (i.e., an upgrade/modification of the first software) using the second software may affect only the first software.

In the case that the second software is software for improvement of networking performance of the M2M device or the M2M gateway, an approval of an M2M service provider may be required. Accordingly, the second software may be stored in a remote software control server for the M2M service provider, and the remote software control server may transmit the second software to the M2M device or the M2M gateway. In this case, after storing the second software, the remote software control server for the M2M service provider may transmit the second software to specific M2M device or M2M gateway which is an upgrade/modification object (i.e., an object to be upgraded or modified) or at an upgrade/modification time (i.e., at a time when an upgrade/modification will be performed) according to control of an M2M server, thereby reducing loads of the remote software control server for the M2M service provider. Herein, the upgrade/modification object may be a corresponding M2M device or M2M gateway to be upgraded or modified.

Meanwhile, in the case that the second software is software for improvement of application performance of an M2M device or an M2M gateway, the second software may be stored in a remote software control server for application softwares. In this case, the remote software control server for application services may transmit the second software to the M2M device or the M2M gateway, according to control of an M2M server.

A software upgrade/modification procedure described above may replace (or change) a portion of the first software using the second software. Furthermore, the software upgrade/modification procedure may completely replace (or change) an entire first software with the second software.

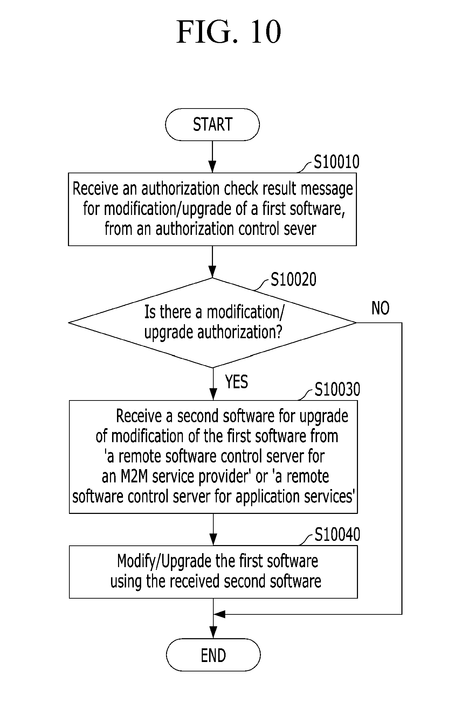

FIG. 10 illustrates a procedure of performing an upgrade or modification of a certain software in an M2M device performing an M2M communication or an M2M gateway performing a gateway function in accordance with at least one embodiment.

At step S10010, in order to upgrade or modify a first software, such apparatus (e.g., 2900) as an M2M device or an M2M gateway may receive an authorization check result message from an authorization control sever (e.g., 2500). Herein, the authorization check result message may include a determination result for whether there is an authorization to upgrade or modify the first software.

As a result of ascertainment of the received authorization result message, when it is ascertained that there is an upgrade/modification authorization (S10020-Yes), the apparatus (e.g., 2900) may receive a second software for upgrade/modification of the first software from 'a remote software control server for an M2M service provider' or 'a remote software control server for application services at S10030. Thereafter, at step S10040, the apparatus (e.g., 2900) may upgrade or modify the first software using the received second software.

Herein, the above-described upgrade or modification of the first software may be performed separately (or independently) from a third software installed in the M2M device or the M2M gateway.

Meanwhile, the first software described in FIG. 10 may be one software among a plurality of software installed in the M2M device or the M2M gateway. Furthermore, a first software upgrade or modification (i.e., an upgrade/modification of the first software) using the second software may affect only the first software.

In the case that the second software is software for improvement of networking performance of the M2M device or the M2M gateway, an approval of the M2M service provider may be required. Accordingly, the apparatus may receive the second software from the remote software control server for the M2M service provider. More specifically, in this case, the remote software control server for the M2M service provider may transmit the second software to specific M2M device or M2M gateway which is an upgrade/modification object (i.e., an object to be upgraded or modified) or at an upgrade/modification time according to control of an M2M server, thereby reducing loads of the remote software control server for the M2M service provider. Accordingly, in the case that the apparatus is a specific M2M device or a specific M2M gateway corresponding to the upgrade/modification object, the apparatus may receive the second software which is transmitted according to control of an M2M server.

Meanwhile, in the case that the second software is software for improvement of application performance of an M2M device or an M2M gateway, the second software may be received from the remote software control server for application softwares. Herein, the remote software control server may be controlled by an M2M server.

A software upgrade/modification procedure described above may replace (or change) a portion of the first software using the second software. Furthermore, the software upgrade/modification procedure may completely replace (or change) an entire first software with the second software. An upgrade/modification scheme according to the present specification may be performed in a network remote entity management (NREM), a gateway remote entity management (GREM), and a device remote entity management (DREM), in connection with M2M communications.

For example, in the case of the NREM, software authenticated by a communication network operator (e.g., a mobile network operator (MNO)), and application software may be independently upgraded or modified.

Meanwhile, the GREM may receive and store a software upgrade/modification file or management data (including related bootstrap) associated with firmware such that an M2M gateway or an M2M device within an M2M area network may perform an upgrade/modification procedure. The GREM may perform an upgrade/ modification procedure, based on the received files/data, i.e., using the software upgrade/modification file and the management data associated with the firmware.

In addition, the GREM may act as an M2M gateway management client. More specifically, the GREM may perform functions associated with a configuration management (CM), a performance management (PM), a fault management (FM), and a software module/firmware upgrade/modification.

The DREM may act as an M2M device management client, and also perform functions associated with the configuration management (CM), the performance management (PM), the fault management (FM), and the software module/firmware upgrade/modification.

Hereinafter, an M2M entity, and a method of upgrading/modifying (updating) software of the M2M entity will be described in more detail.

In other words, embodiments of a method of remotely updating/modifying software of such M2M entity as a device or a gateway in M2M communications will be described in more detail. Furthermore, embodiments of such M2M entity will be described in more detail.

In embodiments described subsequently, a control method of remotely upgrading or modifying (updating) software between M2M service providing systems may include (i) initiating a new software upgrade/modification, (ii) transferring an update/modification command for a software upgrade/modification to an upgrade/modification target system (i.e., a system of which software will be upgraded or modified, or may be referred to as "an upgrade/modification object"), (iii) exchanging related information between the M2M service providing systems, (iv) transferring a new software to the upgrade/modification target system, for a software upgrade or modification, (v) completing the software and notifying an upgrade/modification result, by the upgrade target system, and (vi) ascertaining an upgrade completion result, by a system having initiated the new software upgrade. Herein, a message used in a step of initiating the new software upgrade may include parameter information for software installation, environment type information of corresponding software, and content type information of the corresponding software.

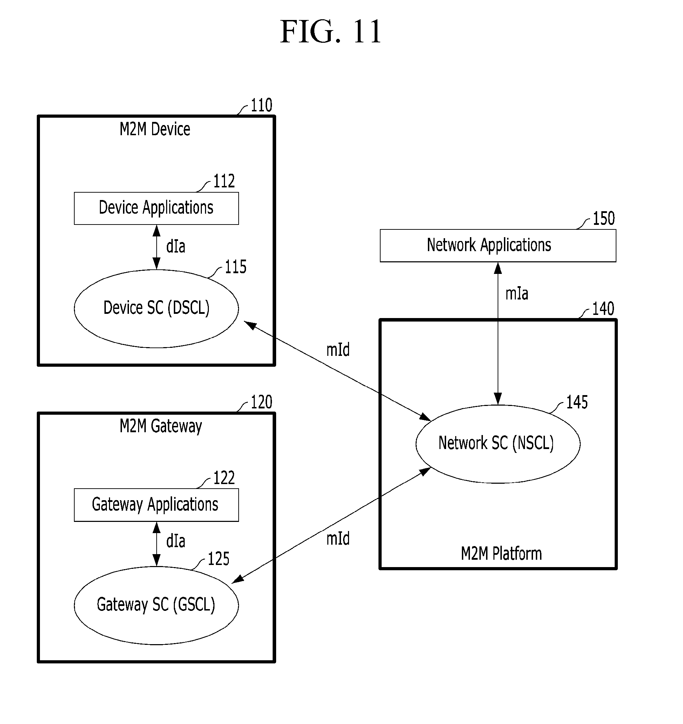

FIG. 11 illustrates a structure of an M2M system to which at least one embodiment may be applied.

Referring to FIG. 11, the M2M system may include M2M device 110, M2M gateway 120, M2M platform 140, and network application (hereinafter referred to as 'NA') 150.

M2M device 110 may include device application (hereinafter referred to as 'DA') 112, and device service capability (SC) (hereinafter referred to as 'device service capability layer (DSCL)') 115. DA 112 may perform a service logic provided by M2M device 110, and access DSCL 115 using a dIa interface. DSCL 115 may provide a variety of functions shared by a variety of applications.

M2M device 110 shown in FIG. 11 may communicate with M2M platform 140 through a core network and an access network, using a mId interface.

M2M gateway 120 may include gateway application (hereinafter referred to as 'GA') 122, and gateway SC (hereinafter referred to as 'gateway service capability layer (GSCL)') 125. GA 122 may perform a service logic provided by M2M gateway 120, and access GSCL 125 using a dIa interface. GSCL 125 may provide a variety of functions being shared by a variety of applications.

M2M gateway 120 shown in FIG. 11 may communicate with M2M platform 140 through a core network and an access network, using a mId interface. M2M gateway 120 may be connected to an M2M device which cannot be directly connected to the access network, through an area network. In this case, M2M gateway 120 may act as a proxy of an M2M network by acting on behalf of the connected M2M device.

DSCL 115 and GSCL 125 may provide a terminal resource management function (e.g., a device/gateway remote entity management (D/G REM) function), and a client function (e.g., a device management client) controlling a remote upgrade/modification, among M2M functions (e.g., a device/gateway service capability layer (D/G SCL)) of a terminal providing an M2M service.

M2M platform 140 may include a network service capability (hereinafter referred to as 'network service capability layer (NSCL)') 145. NSCL 145 may provide a variety of functions being shared by a variety of applications. NSCL 145 may provide a resource management function (e.g., a network remote entity management (NREM) function) being performed in a network, and a server function (e.g., a device management server function) controlling a remote upgrade/modification.

NA 150 may be an application server. NA 150 may provide a user interface for access of an M2M service user. NA 150 may access NSCL 145 using a mIa interface.

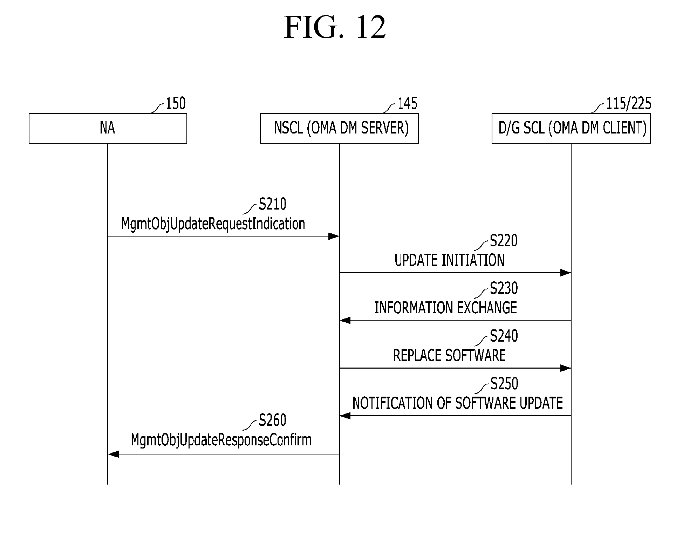

FIG. 12 is a diagram illustrating a control procedure initiating a software upgrade/modification in a sever providing an M2M service, and messages used for each operation.

Referring to FIG. 12, at a first step S210 for a software upgrade/modification in a server providing an M2M service, NA 150 may send a message (e.g., "MgmtObjUpdateRequestIndication") to NSCL145 in order to notify an upgrade/modification initiation (or an upgrade/modification start) associated with software of a certain system.

At a second step S220, NSCL 145 may send a message (e.g., "Update Initiation") to D/G SCL 115/125 in order to transfer an upgrade/modification initiation of a terminal software. At a third step S230, D/G SCL 115/125 may send a message (e.g.,"Information Exchange") to NSCL 145 in order to exchange information required for upgrade/modification of a terminal software. At a fourth step S240, NSCL 145 may send a new software in form of "Replace software" message to D/G SCL 115/125 in order to upgrade or modify software of a terminal. In this case, when receiving all of the new software, D/G SCL 115/125 may store the received new software, execute the stored new software, and change or add information required for operations of the new software. At a fifth step S250, D/G SCL 115/125 may send a message (e.g., "Notification of Software Update") to NSCL 145, in order to ascertain an upgrade/modification result and respond according to the upgrade/modification result.

At a sixth step S260, NSCL 145 may send a message (e.g., "MgmtObjUpdateResponse Confirm") to NA 150 in order to terminate a software upgrade.

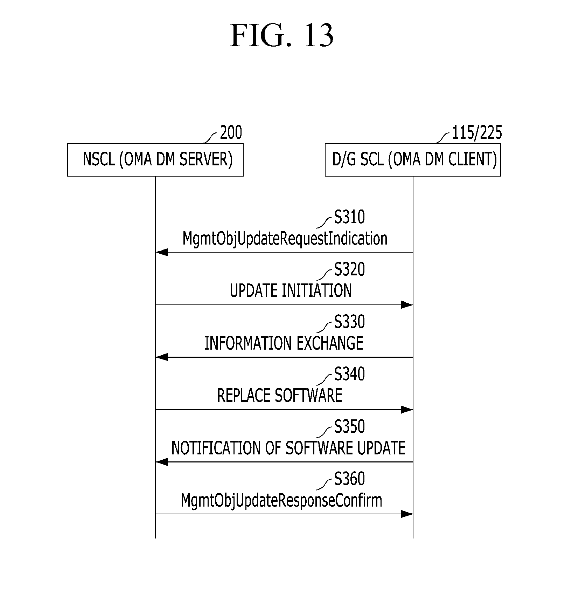

FIG. 13 is a diagram illustrating a control procedure initiating a software upgrade/modification in a terminal (or device) providing an M2M service (or may be referred to as "an M2M communication service"), and messages used for each operation. A control procedure shown in FIG. 13 may differ in initiation steps from control procedures shown in FIG. 11 and FIG. 12. However, the elements of messages used in each operation (or each step) in FIG. 13 and FIG. 12 may be similar or the same.

Referring to FIG. 13, at a first step S310 for a software upgrade/modification in a server providing an M2M service, D/G SCL 115/125 may send a message (e.g., "MgmtObjUpdateRequestIndication") to NSCL145 in order to notify an upgrade/modification initiation (or an upgrade/modification start) associated with software of a certain system.

At a second step S320, NSCL 145 may send a message (e.g., "Update Initiation") to D/G SCL 115/125 in order to transfer an upgrade/modification initiation of a terminal software. At a third step S330, D/G SCL 115/125 may send a message (e.g., "Information Exchange") to NSCL 145 in order to exchange information required for upgrade or modification of a terminal software. At a fourth step S340, NSCL 145 may send a new software in form of "Replace software" message to D/G SCL 115/125 in order to upgrade or modify software of a terminal. In this case, when receiving all of the new software, D/G SCL 115/125 may store the received new software, execute the stored new software, and change or add information required for operations of the new software. At a fifth step S350, D/G SCL 115/125 may send a message (e.g., "Notification of Software Update") to NSCL 145, in order to ascertain an upgrade/modification result and respond according to the upgrade/modification result.

At a sixth step S360, NSCL 145 may send a message (e.g., "MgmtObjUpdateResponseConfirm") to D/G SCL 115/125 in order to terminate a software upgrade/modification.

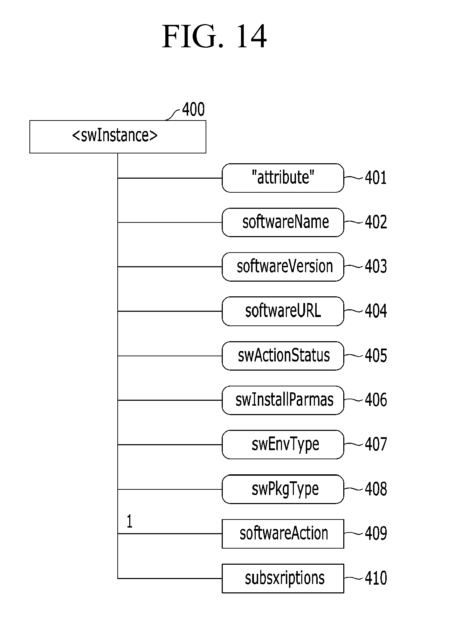

FIG. 14 illustrates a scheme of storing constitution information of a message used in a control procedure of an M2M system, and a structure of the constitution information stored in in the M2M system, in accordance with at least one embodiment.

In case of constituting information as shown in FIG. 14, <swInstance> resource (400) may include 'attribute information' and 'resources.' Herein, the attribute information may include a basic attribute information ("attribute" 401) for storing software object information, "softwareName" 402, "softwareVersion" 403, "softwareURL" 404, "swActionStatus" 405, "swInstallParmas" 406, "swEnvType" 407, "swPkgType" 408.
The resources may include "softwareAction" 409 and "subscriptions" 410. In FIG. 14, the attribute information 401 to 408 may be illustrated as "a rectangular with rounded corners," and the resources 409 and 410 may be illustrated as "a rectangular without rounded corners."

For example, in the resource information "<sclBase>/scls/<scl>/mgmtObjs/ <mgmtObj>/etsiSoftware/<swInstance>", all attribute information may be stored in a file name of "attribute." Alternatively, attribute information may be stored using each individual file name. Names of resources (e.g., <sclBase>) expressed as "< >" may be changed to an arbitrary name during a system structural process. For example, resource information may be structured as "ktm2m/scls/scl1/mgmtObjs/dtg/etsiSoftware/dtg1". Attribute information may be stored in an "attribute" file as shown in Table 1 below. Furthermore, resource information associated with additional resources such as "ktm2m/scls/scl1/mgmtObjs/dtg/etsiSoftware/dtg1/softwareAction" or "ktm2m/scls/scl1/ mgmtObjs/dtg/etsiSoftware/dtg1/subscriptions" shown in Table 2 below may be stored.

**[Table 1]**

| **AttributeName** | **Mandatory/Optional** | **Type** | **Description** |
|---|---|---|---|
| accessRightID | M | RW | See 9.2.2. |
| creationTime | M | RO | See 9.2.2. |
| lastModifiedTime | M | RO | See 9.2.2. |
| originalMO | M | WO | See 9.2.3.27 |
| softwareName | M | RW | The name of the software |
| softwareVersion | M | RW | The version of the software |
| softwareURL | M | RW | The URL of the software to be downloaded |
| swActionStatus | M | RO | Indicates the status of the Action (including a progress indicator, a final state and a reminder of the requested action) |
| swInstallParmas | O | RW | The installation parameters of the software |
| swEnvType | O | RW | The Environment type of the software |
| swPkgType | O | RW | The Content Type of the software. The value MUST be a MIME Content Type. |

**[Table 2]**

| **SubResource** | **Mandatory/Optional** | **Multiplicity** | **Description** |
|---|---|---|---|
| softwareAction | M | 1 | A sub-resource that contains the action to be executed. |
| subscriptions | M | 1 | See 9.2.3.22. |

In Table 1, "accessRightID" may represent an identifier of an entity capable of accessing a resource. "creationTime" may represent a time of creation of a resource. "lastModifiedTime" may represent a last modification time of a resource. "originalMO" may represent a path of a management object on a remote entity. "accessRightID," "creationTime," "lastModifiedTime," and "originalMO' may be included in "attribute" 401 of FIG. 14.

"softwareName" may represent a name of software. "softwareVersion" may represent a version of software. "softwareURL" may represent a URL of the software to be downloaded. "swActionStatus" may indicate a status of an action. "swInstallParmas" may represent a parameter for installation of software. "swEnvType" may represent an environment type of software. "swPkgType" may represent a content type of software. "softwareName," "softwareVersion," "softwareURL," "swActionStatus," "swInstallParmas," "swEnvType," and "swPkgType" may be included in softwareName 402, softwareVersion 403, softwareURL 404, swActionStatus 405, swInstallParmas 406, swEnvType 407, and swPkgType 408, respectively.

In Table 1, "M" and "O" may indicate "Mandatory information" and "Optional information," respectively. "RW" may represent that both READ and WRITE are permitted. "RO" may represent that only READ is permitted. "WO" may represent that WRITE is permitted only once.

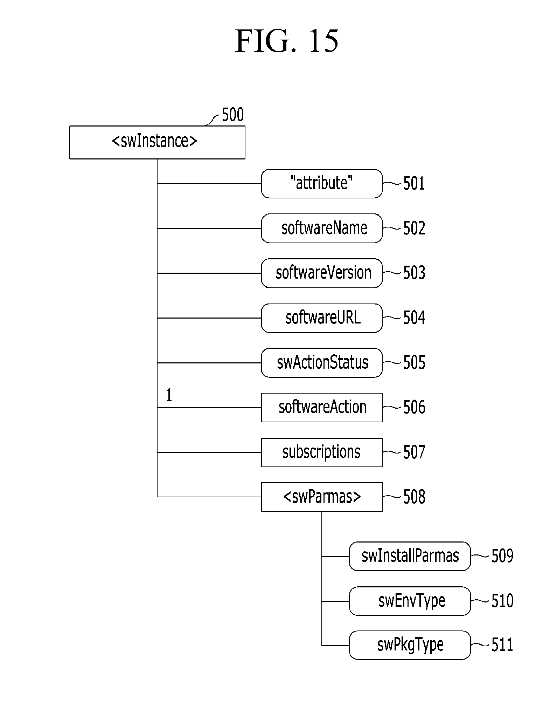

FIG. 15 illustrates a scheme of storing structural information of a message used in a control procedure of an M2M system, and a structure of the information stored in in the M2M system, in accordance with other embodiments.

In case as shown in FIG. 15, <swInstance> resource (500) may include 'attribute information' and 'resources.' Herein, the attribute information may include a basic attribute information ("attribute" 501) for storing software object information, "softwareName" 502, "softwareVersion" 503, "softwareURL" 504, and "swActionStatus" 505. The resources may include "softwareAction" 506, "subscriptions" 507, and "<swParmas>" 508. In FIG. 15, the attribute information 501 to 505 may be illustrated as "a rectangular with rounded corners," and the resources 506 to 508 may be illustrated as "a rectangular without rounded corners."

<swParmas> resource 508 may have attribute information including "swInstallParmas" 509, "swEnvType" 510, and "swPkgType" 511.

For example, in the resource information "<sclBase>/scls/<scl>/mgmtObjs/ <mgmtObj>/etsiSoftware/<swInstance>", all attribute information may be stored in a file name of "attribute." Alternatively, attribute information may be stored using each individual file name. Names of resources (e.g., <sclBase>) expressed as "< >" may be changed to an arbitrary name during a system constitution process. For example, resource information may be constituted as "ktm2m/scls/scl1/mgmtObjs/dtg/etsiSoftware/dtg1". Attribute information may be stored in "attribute" file as shown in Table 3 below. Furthermore, resource information associated with additional resources such as "ktm2m/scls/scl1/mgmtObjs/dtg/etsiSoftware/dtg1/softwareAction," "ktm2m/scls/scl1 /mgmtObjs/dtg/etsiSoftware/dtg1/subscriptions," and "ktm2m/scls/scl1/mgmtObjs/dtg /etsiSoftware/dtg1/<swParmas>" shown in Table 4 below may be stored. <swParmas> in Table 4 may store attribute information in "attribute" file as shown in Table 5 below.

**[Table 3]**

| **AttributeName** | **Mandatory/Optional** | **Type** | **Description** |
|---|---|---|---|
| accessRightID | M | RW | See 9.2.2. |
| creationTime | M | RO | See 9.2.2. |
| lastModifiedTime | M | RO | See 9.2.2. |
| originalMO | M | WO | See 9.2.3.27 |
| softwareName | M | RW | The name of the software |
| softwareVersion | M | RW | The version of the software |
| softwareURL | M | RW | The URL of the software to be downloaded |
| swActionStatus | M | RO | Indicates the status of the Action (including a progress indicator, a final state and a reminder of the requested action) |

**[Table 4]**

| **SubResource** | **Mandatory/Optional** | **Multiplicity** | **Description** |
|---|---|---|---|
| softwareAction | M | 1 | A sub-resource that contains the action to be executed. |
| subscriptions | M | 1 | See 9.2.3.22. |
| <swParmas> | M | 1 | See 9.2.3.22. |

**[Table 5]**

| **AttributeName** | **Mandatory/Optional** | **Type** | **Description** |
|---|---|---|---|
| swInstallParmas | O | RW | The installation parameters of the software |
| swEnvType | O | RW | The Environment type of the software |
| swPkgType | O | RW | The Content Type of the software. The value MUST be a MIME Content Type. |

In Table 3, "accessRightID" may represent an identifier of an entity capable of accessing a resource. "creationTime" may represent a time of creation of a resource. "lastModifiedTime" may represent a last modification time of a resource. "originalMO" may represent a path of a management object on a remote entity. "accessRightID," "creation Time," "lastModifiedTime," and "originalMO' may be included in "attribute" 501 of FIG. 15.

"softwareName" may represent a name of software. "softwareVersion" may represent a version of software. "softwareURL" may represent a URL of the software to be downloaded. "swActionStatus" may indicate a status of an action. "softwareName," "softwareVersion," "softwareURL," and "swActionStatus" may be included in softwareName 502, softwareVersion 503, softwareURL 504, and swActionStatus 505, respectively.

In Table 5, "swInstallParmas" may represent a parameter for installation of software. "swEnvType" may represent an environment type of software. "swPkgType" may represent a content type of software. "swInstallParmas," "swEnvType," and "swPkgType" may be included in swInstallParmas 509, swEnvType 510, and swPkgType 511, respectively.

In Table 3, "M" and "O" may indicate "Mandatory information" and "Optional information," respectively. "RW" may represent that both READ and WRITE are permitted. "RO" may represent that only READ is permitted. "WO" may represent that WRITE is permitted only once.

Table 6 below may indicate structural information of a message used in a control procedure of an M2M system according to the present embodiment. In particular, Table 6 may indicate structural elements of information used at step (or operation) (S210 of FIG. 12, or S310 of FIG. 13) of initiating a remote software upgrade/modification. Information of Table 6 may include attribute information (e.g., "requestingEntity," "Target ID," and "primitive Type") and information shown in FIG. 14 or FIG. 15. Herein, "requestingEntity" may represent an entity requiring a software upgrade or modification. "Target ID" may represent a URI of a resource or attribute to be updated or modified. "primitive Type" may indicate a type of information.

**[Table 6]**

| SCL Primitive : MgmtObjUpdateRequestIndication | | | | |
|---|---|---|---|---|
| REST mapping : UPDATE | | | | |
| Applicable interfaces | mIa | dIa | mId | |
| Issuer | Application | - | D/G SCL | |
| Receiver | LocalSCL | - | NSCL | |

| ***Primitive attribute*** | ***Mandatory*/*optional*** | | | ***Description*** |
|---|---|---|---|---|
| requestingEntity | M | | | Application or SCL originally requesting the updating |
| TargetID | M | | | The URI of the <*mgmtObj*> resource to be updated. Or the URI of the attribute ([partial addressing]) to be updated. |
| primitive Type | M | | | Indicates the type of primitive: MGMTOBJ UPDATE REQUEST |

| ***Resource*** | ***Mandatory*/*optional*** | | | ***Description*** |
|---|---|---|---|---|
| mgmtObj | M | | | Resource representation |

Table 7 below may indicate structural information of a message used in a control procedure of an M2M system according to the present embodiment. In particular, Table 6 may indicate structural elements of information used at step (or operation) (S260 of FIG. 12, or S360 of FIG. 13). Herein, step S260 and step S360 may ascertain an upgrade/modification success, and send a response indicating "an upgrade/modification success." Constitution information of Table 7 may include attribute information (e.g., "primitive Type" and "statusCode") and/or information shown in FIG. 14 or FIG. 15. Herein, "primitiveType" may indicate a type of information. "statusCode" may indicate status information. Status information shown in Table 7 may indicate "success."

**[Table 7]**

| SCL Primitive : MgmtObjUpdateRequestConfirm | | |
|---|---|---|
| ***Primitive attribute*** | ***Mandatory*/*optional*** | ***Description*** |
| primitive Type | M | Indicates the type of primitive: MGMTOBJ UPDATE_REQUEST |
| statusCode | M | Provide success code |

| ***Resource*** | ***Mandatory*/*optional*** | ***Description*** |
|---|---|---|
| mgmtObj | O | Full representation of the updated <*mgmtObj>* resource, if any of the provided attributes were modified by the hosting SCL. |

Table 8 below may indicate structural information of a message used in a control procedure of an M2M system according to the present embodiment. In particular, Table 8 may indicate structural elements of information used at step (or operation) (S260 of FIG. 12, or S360 of FIG. 13). Herein, step S260 and step S360 may ascertain an upgrade/modification failure, and send a response indicating "an upgrade/modification failure." Constitution information of Table 8 may include attribute information such as "primitive Type" and "statusCode." Herein, "primitive Type" may indicate a type of information. "statusCode" may indicate status information. Status information shown in Table 8 may indicate "failure."

**[Table 8]**

| SCL Primitive : MgmtObjUpdateRequestConfirm | | |
|---|---|---|
| ***Primitive attribute*** | ***Mandatory*/*optional*** | ***Description*** |
| primitive Type | M | Indicates the type of primitive: MGMTOBJ_UPDATE_REQUEST |
| statusCode | M | Provide success code |

As described above, since the technical idea of the present invention is described by exemplary embodiments, various forms of substitutions, modifications and alterations may be made by those skilled in the art from the above description without departing from essential features of the present invention. Therefore, the embodiments disclosed in the present invention are intended to illustrate the technical idea of the present invention, and the scope of the present invention is not limited by the embodiment. The scope of the present invention shall be construed on the basis of the accompanying claims in such a manner that all of the technical ideas included within the scope equivalent to the claims belong to the present invention.

### CROSS-REFERENCE TO RELATED APPLICATION

The present application claims priority under 35 U.S.C. §119(a) to Korean Patent Application No. 10-2011-0029115 (filed on March 30, 2011), Korean Patent Application No. 10-2011-0044469 (filed on May 12, 2011), and Korean Patent Application No. 10-2011-0106094 (filed on October 17, 2011), which are hereby incorporated by reference in their entirety. In addition, the present application claims priority in countries, other than U.S., with the same reason based on the Korean Patent Applications, which are hereby incorporated by reference in their entirety.

## Claims

1. A method of separately upgrading or modifying a remote software installed in (i) a machine to machine (M2M) device which performs a function of an M2M communication enabling communications between two or more machines or (ii) an M2M gateway performing a gateway function in the M2M communication, the method comprising:
transmitting, by a first server, a second software for upgrade or modification of a first software to the M2M device or the M2M gateway, wherein the first software is installed in the M2M device or the M2M gateway; and
performing the upgrade or modification of the first software, separately from a third software installed in the M2M device or the M2M gateway,
wherein the third software is upgraded or modified by a second server, and the first server is an entity different from the second server.

2. The method of claim 1, wherein when the first server is a server of an M2M service provider associated with a communication network applied to the M2M communication,
the second server is a server of at least one of (i) a manufacturer of the M2M device or the M2M gateway and (ii) an application provider having created the first software.

3. The method of claim 2, wherein when the first server is a server of at least one of (i) a manufacturer of the M2M device or the M2M gateway and (ii) an application provider having created the first software,
the second server is a server of an M2M service provider associated with a communication network applied to the M2M communication.

4. The method of claim 3, wherein the M2M device or the M2M gateway requests an authorization check associated with the upgrade or modification of the first software to an authorization control server, in order to modify or upgrade the first software.

5. The method of claim 1, wherein when the second software is a software for improvement of networking performance of the M2M device or the M2M gateway,
the transmitting, by the first server, the second software to the M2M device or the M2M gateway includes:
storing the second software to a remote software control server for an M2M service provider; and
transmitting, by the remote software control server for the M2M service provider, the second software to the M2M device or the M2M gateway.

6. The method of claim 5, further comprising:
after storing the second software to the remote software control server for the M2M service provider,
transmitting the second software at an upgrade/modification time to the M2M device or the M2M gateway to be upgraded or modified, according to control of an M2M server.

7. The method of claim 1, wherein when the second software is a software for improvement of application performance of the M2M device or the M2M gateway,
the transmitting, by the first server, the second software to the M2M device or the M2M gateway includes:
storing the second software to a remote software control server for an application service; and
transmitting, by the remote software control server for the application service, the second software to the M2M device or the M2M gateway according to control of an M2M server.

8. A method of upgrading or modifying a first software installed in (i) a machine to machine (M2M) device which performs a function of an M2M communication enabling communications between two or more machines or (ii) an M2M gateway performing a gateway function in the M2M communication, the method comprising:
receiving a second software for upgrade or modification of the first software from a first server; and
upgrading or modifying the first software using the received second software,
wherein the upgrading or modifying is performed separately from a third software installed in the M2M device or the M2M gateway, and the first server is a different entity from the second server performing upgrade of the third software.

9. The method of claim 8, wherein when the first server is a server of an M2M service provider associated with a communication network applied to the M2M communication,
the second server is a server of at least one of (i) a manufacturer of the M2M device or the M2M gateway and (ii) an application provider having created the first software.

10. The method of claim 9, wherein when the first server is a server of at least one of (i) a manufacturer of the M2M device or the M2M gateway and (ii) an application provider having created the first software,
the second server is a server of an M2M service provider associated with a communication network applied to the M2M communication.

11. The method of claim 10, wherein the M2M device or the M2M gateway requests an authorization check associated with the upgrade or modification of the first software to an authorization control server, in order to modify or upgrade the first software.

12. The method of claim 8, wherein when the second software is a software for improvement of networking performance of the M2M device or the M2M gateway,
the receiving the second software from the first server includes:
receiving the second software from a remote software control server for an M2M service provider.

13. The method of claim 8, wherein when the second software is a software for improvement of application performance of the M2M device or the M2M gateway,
the receiving the second software from the first server includes:
receiving the second software from a remote software control server for an application service according to control of an M2M server.

14. The method of claim 8, further comprising:
determining whether a communication is possible, before the receiving the second software from the first server.

15. The method of claim 8, further comprising:
transmitting an upgrade or modification result of the first software to an authorization control server or a remote software control server.

16. An apparatus for upgrading or modifying software installed in (i) a machine to machine (M2M) device which performs a function of an M2M communication enabling communications between two or more machines or (ii) an M2M gateway performing a gateway function in the M2M communication, the apparatus comprising:
an upgrade/modification storage unit configured to store a second software for upgrade or modification of a first software, wherein the first software is installed in the M2M device or the M2M gateway;
an authentication processor configured to request an authorization check associated with the upgrade or modification of the first software to an authorization control server, in order to modify or upgrade the first software; and
a communication processor configured to transmit the second software to the M2M device or the M2M gateway,
wherein the upgrade or modification of the first software is performed in a different apparatus from an apparatus which modifies or upgrades a third software installed in the M2M device or the M2M gateway.

17. An apparatus, in which a first software is installed, for performing a machine to machine (M2M) communication or a gateway function, in order to upgrade software installed in (i) an M2M device which performs a function of the M2M communication enabling communications between two or more machines or (ii) an M2M gateway performing a gateway function in the M2M communication, the apparatus comprising:
an upgrade/modification control processor configured to receive a second software for upgrade or modification of the first software, from a first server; and
an upgrade/modification processor configured to modify or upgrade the first software using the received second software,
wherein the first server is a different entity from a second server which modifies or upgrades a third software installed in the at least one of the M2M device and the M2M gateway.

18. The apparatus of claim 17, wherein the upgrade/modification processor determines an upgrade/modification necessity, using at least one of a partition identifier of a software storage space, storage path information, date/time information of a software upgrade/modification, a software size, a software name, and software version information.

19. A method of separately upgrading or modifying a remote software installed in (i) a machine to machine (M2M) device which performs a function of an M2M communication enabling communications between two or more machines or (ii) an M2M gateway performing a gateway function in the M2M communication, in a system including the M2M device, the M2M gateway and a server, the method comprising:
transmitting, by a first server, a second software for upgrade or modification of a first software to the M2M device or the M2M gateway, wherein the first software is installed in the M2M device or the M2M gateway; and
performing, by the M2M device or the M2M gateway, the upgrade or modification of the first software using a received second software,
wherein the first server is a different entity from a second server which modifies or upgrades a third software installed in the M2M device or the M2M gateway.

20. A method of separately upgrading or modifying a remote software installed in a device or gateway which performs a function of an M2M communication enabling communications between two or more machines, the method comprising:
transmitting, by a server, a command for upgrade or modification of a first software to an M2M device or an M2M gateway, wherein the first software is installed in the M2M device or the M2M gateway;
exchanging, by the server, at least one of (i) software installation parameter information for the upgrade or modification of the first software, (ii) environment type information of the first software, and (iii) content type information of the first software, with the M2M device or the M2M gateway;
transmitting, by the server, a second software for the upgrade or modification of the first software to the M2M device or the M2M gateway; and
receiving, by the server, a completion notification of the upgrade or modification of the first software from the M2M device or the M2M gateway.

21. A method of separately upgrading or modifying a remote software installed in a device or gateway which performs a function of an M2M communication enabling communications between two or more machines, the method comprising:
receiving, by an M2M device or an M2M gateway, a command for upgrade or modification of an installed first software from a server;
exchanging at least one of (i) software installation parameter information for the upgrade or modification of the first software, (ii) environment type information of the first software, and (iii) content type information of the first software, with the server;
receiving a second software for the upgrade or modification of the first software;
performing, by the M2M device or the M2M gateway, the upgrade or modification of the first software using the second software; and
notifying an upgrade/modification completion of the first software to the server.
